# EUROPÄISCHE PATENTSCHRIFT

(11) **EP 0 514 674 B1**
(45) Veröffentlichungstag und Bekanntmachung des Hinweises auf die Patenterteilung: **19.07.1995**
(21) Anmeldenummer: 92106849.0
(22) Anmeldetag: 22.04.1992
(51) Int. Cl.: C08F 214/18, C08F 210/00, C08F 216/12, C08F 218/12

(54) **Unvernetzte Copolymerisate mit reaktiven Doppelbindungen aus Fluormonomeren und nicht konjugierten Dienen und Verfahren zu ihrer Herstellung**
Non-crosslinked copolymers with reactive double bonds made of fluoro-monomers and of non-conjugated dienes and process for their preparation
Copolymères non-réticulés avec doubles liaisons réactives faits de monomères fluorés et de diènes non-conjugués et leurs procédés de préparation

(30) Priorität: 04.05.1991 DE 4114598
(43) Veröffentlichungstag der Anmeldung: 25.11.1992
(73) Patentinhaber: BAYER AG, 51368 Leverkusen (DE)
(72) Erfinder: Langstein, Gerhard, Dr., W-5067 Kürten-Biesfeld (DE); Krüger, Ralf, Dr., W-5060 Bergisch Gladbach (DE); Piejko, Karl-Erwin, Dr., W-5060 Bergisch Gladbach 2 (DE)

(56) Entgegenhaltungen:
- EP-A- 0 302 513

## Beschreibung

Die vorliegende Erfindung betrifft Fluorcopolymere mit reaktiven ungesättigten Seitengruppen und ein Verfahren zu ihrer Herstellung.

Fluorpolymere werden in der Technik immer dann eingesetzt, wenn besondere Eigenschaften, wie niedrige Oberflächenspannung, hohe Chemikalienbeständigkeit oder extreme Anforderungen an die Alterungsstabilität verlangt werden. Für viele Einsatzzwecke werden die Fluorpolymere während oder nach der Formgebung vernetzt, wie beispielsweise bei einer Verwendung auf dem Kautschukgebiet. Diese Vernetzungsreaktionen benötigen im Falle nicht modifizierter Fluorelastomere, die also keine besonderen Reaktivstellen enthalten, drastische Bedingungen, wodurch die Vernetzung schwierig zu steuern ist und Schädigungen des Fluorpolymers auftreten können. Um dies Zu vermeiden, führt man Reaktivstellen, sogenannte Curesites, in die Polymerketten ein, an denen selektiv und unter milderen Bedingungen vernetzt werden kann. Solche Cure-sites sind beispielsweise Brom- oder Iodsubstituenten, die in das Fluorpolymer eingeführt werden, indem man entweder Brom- und/oder Iod-haltige Vinylverbindungen in kleinen Mengen mit den Fluormonomeren copolymerisiert, (US 3.351.619; US 4.035.565; US 4.214.060; DE-OS 3 715 210) oder indem man in Gegenwart von gesättigten, Iod oder Brom und Iod enthaltenden Verbindungen polymerisiert (DE-OS 2 815 187; DE-OS 3 710 818). Solche durch Brom und/oder Iod modifizierten Fluorpolymere können in Gegenwart eines Co-Vernetzers radikalisch, beispielsweise durch peroxidische Verbindungen, vernetzt werden. Als Co-Vernetzer können Triallyl-cyanurat oder Triallyl-isocyanurat eingesetzt werden (Rubber Chem. Technol. 55 (1982), 1004).

Solche peroxidisch vernetzten Fluorkautschuke zeigen im Vergleich zu beispielsweise mit Bisphenolen vernetzten Typen eine wesentlich verbesserte Resistenz gegenüber Basen, Nucleophilen und oxidativem Angriff (Kautschuk und Gummi, Kunststoffe 38 (1985), 471).

Die Brom- oder Iod-haltigen Fluorpolymere besitzen jedoch den Nachteil, daß bei der radikalischen Vernetzungsreaktion niedermolekulare Alkylbromide bzw. -iodide entstehen können, die während der Vernetzungsreaktion herausdampfen und dadurch die Verarbeitungs- sowie Gebrauchseigenschaften beeinträchtigen.

Es bestand daher ein Bedarf an Fluorpolymeren, die radikalisch, beispielsweise peroxidisch, unter milden Reaktionsbedingungen vernetzbar sind und die oben genannten Schwächen nicht aufweisen. Diese geforderten Eigenschaften ließen sich grundsätzlich durch den Einbau funktioneller Monomerer, d.h. Monomerer mit reaktiven Doppelbindungen, erreichen, wenn ein gesteuerter Einbau unter Erhalt von Doppelbindungen möglich wäre.

Polymerisiert man jedoch Fluormonomere nach dem Stand der Technik in Gegenwart mehrfach ungesättigter Monomerer, wie Perfluordivinylether (US 3.851.018), so findet bereits während der Copolymerisation in für viele Zwecke unerwünschter Weise eine beträchtliche Vernetzung der Polymeren statt.

Nichtfluorierte konjugierte Diene wie Butadien, Isopren oder Chloropren werden neben einer Vielzahl von Monomeren in EP 360 575 A2 als potentielle Comonomere genannt. Diese Monomere inhibieren jedoch entweder die Polymerisation der Fluormonomeren oder führen zu vernetzten Produkten, so daß sich auch diese Monomere nicht zur Herstellung der gewünschten unvernetzten Fluorpolymere mit seitenständigen Doppelbindungen eignen.

Aus EP 302 513 ist bekannt, daß die Umsetzung von Tetrafluorethylen mit den unterschiedlichsten Dienen in Abwesenheit des Radikalstarters zur Herstellung poröser Produkte führt. Es wurde nun gefunden, daß sich fluorhaltige Vinylverbindungen der unten genannten Art und nicht konjugierte Diene der weiter unter genannten Art so copolymerisieren lassen, daß im wesentlichen unvernetzte Copolymere entstehen, die reaktive Doppelbindungen als Seitengruppen enthalten und radikalisch unter milden Bedingungen vernetzbar (vulkanisierbar) sind. Unter nichtkonjugierten
Dienen versteht der Fachmann Diene, bei welchen die beiden C-C-Doppelbindungen durch mindestens ein sp³-hybridisiertes C-Atom getrennt sind.

Die Erfindung betrifft unvernetzte Copolymerisate mit reaktiven Doppelbindungen mit einem Gelgehalt < 10 % aus den Comonomeren a), b) und c), wobei die Menge an c) 0,1-5 Mol-% und die Summe aus a) und b) 95-99,9 Mol-%, bezogen auf die Molzahlen aller Comonomere, beträgt, in der a) mindestens 45 Mol-% und b) 10-54,9 Mol-% beträgt und
a) Vinylidenfluorid und/oder Chlortrifluorethylen und/oder Vinylfluorid,
b) ein oder mehrere Comonomere aus der Gruppe von
   b1) geradkettigen oder verzweigten C₃-C₈-Alkenen mit mindestens einem Fluoratom,
   b2) Alkyl-vinylethern mit mindestens einem Fluoratom,
   b3) offenkettigen oder cyclischen C₃-C₆-Ketonen mit fluorierten α,α'-Stellungen und
   b4) nicht fluorierten C₂-C₄-Alkenen, C₃-C₆-Alkylvinylethern und/oder C₄-C₆-Vinylestern
   und
c) ein oder mehrere Comonomere aus der Gruppe der nicht konjugierten Diene, bevorzugt aus der Gruppe der nicht konjugierten Diene mit endständigen Doppelbindungen, bedeuten.

Die Erfindung betrifft weiterhin ein Verfahren zur Herstellung von Copolymerisaten der oben beschriebenen Art, das dadurch gekennzeichnet ist, daß man die oben genannten Comonomeren radikalisch in Lösung, Suspension oder Emulsion bei -15°C bis +120°C, bevorzugt bei 20-90°C, besonders bevorzugt bei 30-80°C bei erhöhtem Druck copolymerisiert.

Die erfindungsgemäßen Copolymerisate sind im wesentlichen unvernetzt. Erfindungsgemäß bedeutet dies, daß sie Gelgehalte von <10 %, bevorzugt von <4 % haben; in besonders bevorzugter weise liegt der Gelgehalt unterhalb der Nachweisgrenze, was bedeutet, daß die erfindungsgemäßen Fluorpolymere in Flüssigkeiten, in denen sie überhaupt löslich sind, vollständig löslich sind. Die Bestimmung der Gelgehalte erfolgt hierbei nach M. Hoffmann et. al., Polymeranalytik I und II, Georg Thieme Verlag. Stuttgart 1977. Die Gelgehalte werden hierbei in solchen Lösungsmitteln bestimmt, in denen die entsprechenden Fluorpolymere ohne eingebaute nicht konjugierte Diene vollständig löslich sind. Die erfindungsgemäßen Copolymerisate besitzen mittlere Molmassen von 10³ bis 10⁷ g/Mol, bevorzugt 10³ bis 2·10⁶ g/Mol. Sie sind im wesentlichen linear aufgebaut.

Vinylidenfluorid, Chlortrifluorethylen und Vinylfluorid als Bestandteile a) können sowohl einzeln als auch als Gemisch eingesetzt werden.

Als Bestandteil b) kommen eines oder mehrere Comonomere aus der Gruppe von b1), b2), b3) und b4) in Frage. Bestandteile der Gruppe b1) sind geradkettige oder verzweigte C₃-C₈-Alkene, die mindestens ein Fluoratom enthalten. Beispiele für Stoffe der Gruppe b1) sind: Hexafluorpropen, 2-Hydro-pentafluorpropen, 3,3,3-Trifluorpropen, ein- oder mehrfach fluorierte Butene, wie Hexafluorisobutylen, Pentene, Hexene oder Octene, Solche Stoffe können neben mindestens einem Fluoratom auch Chloratome tragen. In bevorzugter Weise handelt es sich bei Stoffen der Gruppe b1) um C₃-C₆-Alkene mit mindestens einem Fluoratom, in besonders bevorzugter Weise um C₃-C₄-Alkene mit mindestens einem Fluoratom.

Stoffe der Gruppe b2) sind Alkyl-vinylether mit mindestens einem Fluoratom, beispielsweise Perfluorpropyl-perfluorvinylether, Perfluormethyl-perfluorvinylether, Perfluorpropyl-vinylether, n-Butylperfluor-vinylether.

Stoffe der Gruppe b3) sind offenkettige und cyclische C₃-C₆-Ketone mit fluorierten α,α'-Stellungen, die über die C=O-Bindung copolymerisiert werden, wie Hexafluoraceton, Perfluorcyclopentanon.

Stoffe der Gruppe b4) sind nicht fluorierte C₂-C₄-Alkene, wie Ethylen, Propen, 1-Buten, Isobutylen, C₃-C₆-Alkyl-vinylether, wie Methyl-vinylether, Ethyl-vinylether und ähnliche und C₄-C₆-Vinylester, wie Vinylacetat, Vinylpropionat und andere.

Als Bestandteil c) werden nicht konjugierte Diene oder Gemische mehrerer von ihnen eingesetzt. Bevorzugt sind Diene mit mindestens einer endständigen Doppelbindung. Solche Diene entsprechend der Formel

H₂C=C(R¹)-(CH₂)ₙ-C(R²)=CHR³ (I)

wobei n = 1-14 und R¹ - R³ Wasserstoff, Alkyl, Cycloalkyl oder Aryl sein kann.

Alkyl hat 1 bis 6 C-Atome, wie Methyl, Ethyl, Butyl, Hexyl; Cycloalkyl hat 3 bis 6 C-Atome, wie Cyclopropyl, Cyclopentyl, Cyclohexyl; Aryl hat 6 bis 9 C-Atome, wie Phenyl, Tolyl. Bevorzugt sind nicht konjugierte Diene mit 2 endständigen Doppelbindungen, in denen also R¹ und R³ Wasserstoff bedeuten.

Besonders bevorzugt Verwendung finden 1,4-Pentadien, 1,5-Hexadien und 1,7-Octadien.

In den bevorzugten erfindungsgemäßen Copolymerisaten kann Bestandteil a) einen oder mehrere Comonomere aus der Gruppe Vinylidenfluorid, Chlortrifluorethylen und Vinylfluorid enthalten und fluorhaltige C₃-C₈-Alkene können Comonomere des Bestandteils b1) sein.

Die Summe aus a) und b) beträgt 95 - 99,9 Mol-%, bezogen auf die Molzahlen aller Comonomere, wobei die Untergruppen von b), nämlich b1), b2), b3) und b4), grundsätzlich gleichberechtigt sind und in Form einer Verbindung oder in Form eines Gemisches mehrerer Verbindungen aus diesen Untergruppen als Comonomere vertreten sein können.

Die Menge des Bestandteils c) beträgt 0,1 - 5 Mol-%, bevorzugt 0,2 - 2,5 Mol-%, besonders bevorzugt 0,3 - 1,5 Mol-%. Die Menge des Bestandteils a) oder der Summe der Bestandteile a) und b) unter Einsatz der Untergruppen b1), b2), b3) und/oder b4) beträgt entsprechend 95 - 99,9 Mol-%, bevorzugt 97,5 - 99,8 Mol-%, besonders bevorzugt 98,5 - 99,7 Mo-%, Innerhalb dieser zuletzt angegebenen Mengen beträgt die Menge des Bestandteils a) mindestens 45 Mol-%, bevorzugt mindestens 48 Mol-%, besonders bevorzugt mindestens 50 Mol-%, wobei hier wie auch bei anderen Angaben zu den erfindungsgemäßen Copolymeren immer auf die gesamte Molzahl aller Comonomeren Bezug genommen wird.

Als Anteile für den Einsatz als Kautschuke kommen 10 - 54,9 Mol-%, bevorzugt 10 - 51,9 Mol-%, besonders bevorzugt bis 10 - 49,9 Mol-%, ganz besonders bevorzugt 10 - 40 Mol-% b), bezogen auf die Molzahl aller Comonomere, die sich auf verschiedene Untergruppen des Bestandteils b) verteilen können und auch mehr als eine Verbindung umfassen können. In bevorzugter Weise werden als Bestandteile b) solche aus den Untergruppen b1), b2) und/oder b4) eingesetzt. Die nicht fluorhaltigen ungesättigten Verbindungen der Untergruppe b4) werden in bevorzugter Weise bis zu einem Gehalt von 25 Mol-% eingesetzt. Als Kombinationen der Bestandteile a) und b) für den Einsatz als Kautschuk seien beispielsweise genannt: Vinylidenfluorid/Hexafluorpropen und Vinylidenfluorid/Chlortrifluorethylen/Hexafluorpropen.

In einer bevorzugten Ausführungsform der vorliegenden Erfindung wird eine Kombination zweier oder mehrerer Fluormonomeren aus der Gruppe Vinylidenfluorid/Hexafluorpropen und Vinylidenfluorid/Chlortrifluorethylen/Hexafluorpropen eingesetzt.

Neben den soeben beschriebenen Copolymerisaten, in denen Comonomere der Gruppe b) im Unterschuß gegenüber denen der Gruppe a) vorliegen, sind solche Copolymerisate von Bedeutung, in denen die Comonomere der Gruppen a) und b) annähernd in gleicher molarer Menge vorliegen.

Die Polymerisation kann hierbei so gelenkt werden, daß der größte Teil der Polymerkette streng alternierend Monomere a) und b) enthält, zu denen - entsprechend ihrer Gesamtmenge - in größeren Abständen nicht konjugierte Diene der Gruppe c) treten.

Die Zusammensetzung solcher erfindungsgemäßen Copolymerisate mit annäherend gleichen molaren Mengen von Comonomeren der Gruppen a) und b) beträgt 45-55 Mol-% aus Gruppe a), 44,9-54,9 Mol-% aus Gruppe b) und 0,1-5 Mol-% aus Gruppe c), bevorzugt 47,9-51,9 Mol-% aus Gruppe a),47,9-51,9 Mol-% aus Gruppe b) und 0,2-2,5 Mol-% aus Gruppe c).

Zur Herstellung der erfindungsgemäßen Copolymerisate können die für die Copolymerisation fluorhaltiger Monomerer bekannten Verfahrensparameter herangezogen werden; es kann in Lösung, Suspension oder Emulsion copolymerisiert werden (US 2.968.649; US 3.051.677; US 3.053.818; US 3.331.823; US 3.335.106 mit beispielhafter Angabe der in Frage kommenden Reaktionsmedien und allgemeinen Reaktionsbedingungen). Zur Initiierung der radikalischen Copolymerisation werden grundsätzlich bekannte und für das jeweilige Reaktionsmedium geeignete Verbindungen eingesetzt. So verwendet man bei der Lösungs- und Suspensionspolymerisation organische, öllösliche Peroxide, die auch fluoriert sein können, wie Benzoylperoxid, Trifluoracetylperoxid oder organische lösliche Azoverbindungen, wie Azobisisobutyronitril. Bei der Emulsionspolymerisation, die für die Herstellung der erfindungsgemäßen Copolymere bevorzugt wird, werden als radikalische Initiatoren wasserlösliche anorganische Perverbindungen als Initiatoren eingesetzt, wie Persulfate, Perborate, Percarbonate etc., im allgemeinen in Form ihrer Natrium- oder Ammoniumsalze.

In Abhängigkeit von der Polymerisationstemperatur und von der Zerfallskonstante des Initiators müssen bei Anwendung niederer Temperaturen zur Polymerisation Zerfallsbeschleuniger, in der Regel Reduktionsmittel, zusätzlich eingesetzt werden. Als solche können dienen; Schwefelverbindungen, wie etwa Natriumsulfit, Natriumpyrosulfit oder Rongalit C (Natriumformamidinsulfinsäure), weiterhin organische Reduktionsmittel, wie Ascorbinsäure, Metallsalze, wie Eisen (II)- oder Kobalt- (II)-salze, metallorganische Verbindungen etc.

Die Reaktionstemperaturen für die Copolymerisation liegen zwischen -15 und +120°C, bevorzugt bei 20 bis 90°C, besonders bevorzugt bei 30 bis 80°C. Der zuletzt genannte Temperaturbereich bringt besonders günstige Bedingungen bezüglich der Raum-Zeit-Ausbeute und der chemischen Einheitlichkeit der Copolymerisate.

Um das Molekulargewicht der entstehenden Polymeren einzustellen, können Kettenübertragungsmittel, wie Methanol, Isopropanol, Isopentan, Ethylacetat, Diethylmalonat und Tetrachlorkohlenstoff erforderlichenfalls eingesetzt werden.

Es ist ein weiteres Kennzeichen des erfindungsgemäßen Verfahrens, daß die Copolymerisation unter einem erhöhtem Druck durchgeführt wird. Dieser Druck soll mindestens 5 bar betragen, braucht aber den Wert von 100 bar nicht zu überschreiten.

Ein für das erfindungsgemäße Verfahren bevorzugter Bereich ist 5 bis 65 bar.

Die Herstellung der erfindungsgemäßen Copolymerisate kann absatzweise, bevorzugt aber nach halbkontinuierlichen oder kontinuierlichen Verfahren erfolgen.

In einer Ausführungsform des erfindungsgemäßen Verfahrens legt man maximal 5-30 Relativ-% an nicht konjugiertem Dien, bezogen auf die vorgesehene Gesamtmenge an nicht konjugiertem Dien, vor und dosiert den Rest der vorgesehenen Menge an Dien gemäß Polymerisationsfortschritt nach.

In einer vorteilhaften Variante des erfindungsgemäßen Verfahrens wird die stationäre Konzentration an freiem Monomer des Bestandteils c) klein gehalten. Dies wird dadurch erreicht, daß man in absatzweisen oder halbkontinuierlichen Verfahren 0,02 - 1,5 Mol-% an Dien(en), bezogen auf die Gesamtzahl der umzusetzenden Comonomeren, gegebenenfalls gemeinsam mit anderen Comonomeren der Bestandteile a) und b), vorlegt und die restliche Menge an Bestandteil c) entsprechend dem Fortschritt der Copolymerisation gleichmäßig nachdosiert. Dieses Nachdosieren erfolgt selbstverständlich unter gleichzeitigem Nachdosieren auch der Bestandteile a) und b). Der genannte Bereich 0,02 - 1,5 Mol-% an Dien(en) stellt jeweils einen Teil von etwa 5 - 30 Relativ-% an Bestandteil c), bezogen auf die insgesamt einzusetzende Menge an 0,1 - 5 Mol-% des Bestandteile c), dar. Das Vorlegen und das Nachdosieren des Bestandteils c) kann in Form der reinen Diene oder als Bestandteil einer wäßrigen Lösung, die den Emulgator enthält, erfolgen, aber auch als Lösung in solchen Lösungsmitteln, die die radikalische Copolymerisation nicht stören. Solche Lösungsmittel sind beispielsweise t-Butanol und Methylacetat.

In einer weiteren Ausführungsform des erfindungsgemäßen Verfahrens werden sowohl das Dien als auch die Fluorcomonomeren bzw. die sie teilweise ersetzenden nicht fluorierten Monomere gemäß Polymerisationsfortschritt nachdosiert.

Die erfindungsgemäßen Copolymerisate können radikalisch vernetzt werden. Der Radikalstart kann durch energiereiche Strahlung oder thermisch in Gegenwart von Radikalstartern eingeleitet werden. Als radikalische Initiatoren dienen vorzugsweise Peroxide, die bei Temperaturen oberhalb von 100°C Halbwertszeiten der Zersetzung von wenigstens 5 Minuten aufweisen. Solche Initiatoren sind beispielsweise Dibenzoylperoxid, Bis-(tert.-butylperoxyisopropyl)-benzol oder 2,5-Bis-(tert.-butylperoxy)-2,5-dimethylhexan, die in üblichen Mengen eingesetzt werden. Die Einarbeitung eines solchen Peroxids in das unvernetzte erfindungsgemäße Copolymerisat ist nach den herkömmlichen Methoden der Mischungsbildung möglich. So können die erfindungsgemäßen Copolymere auf der Walze oder im Kneter zu den genannten Mischungen verarbeitet werden, die anschließend bei 120 bis 180°C zu Elastomeren vulkanisiert werden oder zu formstabilen Formkörpern verfestigt werden. Eine Verarbeitung in Lösung oder Schmelze ist ebenso möglich, wobei nach der Formgebung die Trocknung und Vernetzung in einem Schritt erfolgen können, wenn man etwa Formkörper in Form von Folien, Filmen, Fasern oder kompakten Formkörpern herstellt. Als Co-Vernetzer kann (können) eine oder mehrere Verbindungen aus der Vielzahl der bekannten Verbindungen mit mehreren Doppelbindungen dienen, wie beispielsweise Triallylcyanurat, Triallylisocyanurat, Trimethallylisocyanurat, Tetramethyl-tetravinyl-cyclotetrasiloxan, m-Phenylen-bismaleinimid und andere.

Die erfindungsgemäßen Copolymerisate sind vor allem durch gute Verarbeitungseigenschaften, wie die Vermischbarkeit mit Füllstoffen, Vernetzungshilfsmitteln, Pigmenten etc. ausgezeichnet, so daß Mischungen oder Blends von hoher Homogenität erzeugt werden können, die anschließend schnell und unter schonenden Bedingungen zu thermostabilen Vulkanisaten oder gehärteten Formkörpern vernetzt werden können` Der Vernetzungsgrad und damit die physikomechanischen Eigenschaften des vernetzten Materials lassen sich in weiten Grenzen gezielt variieren.

Ein besonderer Vorteil der erfindungsgemäßen Copolymerisate ist, daß sie kein Brom und/oder Iod enthalten und demzufolge bei der peroxidischen Vernetzung kein toxisches Alkylbromid und/oder -jodid freigesetzt werden kann.

### Beispiele

### Beispiel 1

In einem 6,0 l-Autoklaven wurden 3000 ml entionisiertes Wasser vorgelegt. Darin wurden 20 g Lithiumperfluoroctylsulfonat und 13 g Ammoniumpersulfat gelöst. Anschließend wurde der geschlossene Autoklav dreimal jeweils mit einem Stickstoffdruck von 10 bar beaufschlagt und anschließend auf Normaldruck entspannt. In den Autoklaven wurden 1100 g Hexafluorpropen und 200 g Vinylidenfluorid gegeben und das Reaktionsgemisch im Anschluß daran auf 70° C erwärmt, Nach Erreichen dieser Temperatur wurden innerhalb von 5 Stunden 100 ml einer Lösung von 18,9 g 1,5-Hexadien in 72,7 ml t-Butanol zugepumpt. Nach dem Zupumpen wurde 6 Stunden bei 70° C nachgerührt. Der Druck nahm während dieser Zeit von 31 bar auf 21 bar ab. Nach dem Abkühlen wurden die Restmonomeren durch dreistündiges Nachrühren entfernt und die wässrige Emulsion (pH - 2,6) zum Koagulieren des Produktes in 1500 ml einer 4%igen wässrigen Magnesiumsulfatlösung gegossen. Das Produkt wurde mit Wasser gewaschen und getrocknet. Die Ausbeute betrug 375 g eines kautschukartigen Polymeren, das Hexafluorpropen, Vinylidenfluorid und 1,5-Hexadien enthält. Das molare Verhältnis von Hexafluorpropen zu Vinylidenlfuorid wurde durch 19-F-Kernresonanzspektroskopie bestimmt und beträgt 38 : 62. Mittels Iodometrie (Iodzahl nach HANUS) wurde der Anteil des im Copolymeren gebundenen 1,5-Hexadiens bestimmt,
der noch freie Doppelbindungen anzeigt. Die Iodzahl beträgt 0,5 g I₂/100 g Polymer und das Copolymere enthält demzufolge 0,2 mol-% 1,5-Hexadien. Die Iodzahlen vergleichbarer Kautschuke ohne Dien lagen unter 0,1 g I₂/100 g Polymer. Das Copolymer ist in 3,5-Bis-(trifluormethyl)phenol (BTFMP) vollständig löslich; die Grenzviskosität beträgt 0,3 dl/g (BTFMP, 120° C).

### Beispiel 2

In einem 0,3 l-Autoklaven wurden 129 ml entionisiertes Wasser vorgelegt. Darin wurden 1,67 Natriumperfluoroctanoat und 0,66 g Kaliumperoxidisulfat gelöst. Mit Natriumhydroxid wurde diese Lösung auf einen pH-Wert von 10 eingestellt. Anschließend wurden darin 0,7 g 1,4-Hexadien dispergiert. Dann wurde der geschlossene Autoklav dreimal mit einem Stickstoffdruck von 10 bar beaufschlagt und anschließend auf Normaldruck entspannt. In den Autoklaven wurden 47 g Hexafluorpropen und 13 g Vinylidenfluorid gegeben und das Reaktionsgemisch unter Rühren auf 70° C erwährmt. Nach einer Gesamtreaktionszeit von 6 Stunden, in welcher der Reationsdruck von 31 bar auf 18 bar abnahm, wurde der Druckbehälter auf Raumtemperatur abekühlt und das nicht umgesetzte Monomer abgelüftet. Die so erhaltene wässrige Emulsion wurde zum Koagulieren des Produktes in 150 ml einer 4%igen wässrigen Magnesiumsulfatlösung gegossen. Das Produkt wurde mit Wasser gewaschen und dann getrocknet.

16,8 g eines kautschukartigen Polymeren, das Hexafluorpropen, Vinylidenfluorid und 1,4-Hexadien enthält, konnten isoliert werden. Die molare Zusammensetzung wurde analog der im Beispiel 1 beschriebenen Methode bestimmt und beträgt 29,9 : 69,85 : 0,25 (Hexafluorpropen/Vinylidenfluorid/1,4-Hexadien). Das Copolymer ist in BTFMP (120° C) vollständig löslich. Die Grenzviskosität beträgt 0,1 dl/g (BTFMP, 120° C).

### Beispiel 3

In einen kontinuierlich betriebenen gerührten 0,7 l-Reaktor wurde Vinylidenfluorid mit 60 g/h und Hexafluorpropen mit 105 g/h zugepumpt. Gleichzeitig wurde ein Gemisch aus 4,4 g Lithiumperfluoroctansulfonat, 100 ml tert.-Butanol, 2,15 g 1,5-Hexadien und 1 400 ml entionisiertem Wasser mit 225 ml/h und eine Lösung aus 5,16 g Ammoniumpersulfat und 0,87 g Dinatriumhydrogenphosphat in 1.400 ml entionisiertem Wasser mit 225 ml/h zugepumpt. Der Druck im Reaktor wurde mit einem Druckhalteventil auf 45 bar gehalten. Die Reaktionstemperatur betrug 90° C. Der Umsatz betrug 67,5 %. Die Produkte wurden, wie in den Beispielen 1 bis 3 beschrieben, isoliert. Die molare Zusammensetzung wurde analog der im Beispiel 1 beschriebenen Methode bestimmt und beträgt 29,3 : 70,1 : 0,6 (Hexafluorpropen/Vinylidenfluorid/1,5-Hexadien). Die Grenzviskositätszahl (BTFMP, 120° C) beträgt 0,6 dl/g, der Gelgehalt wurde mit 2 % bestimmt.

Von einem so erhaltenen Copolymer wurde in einem Kneter eine Mischung aus 100 Gew.-Tln. Polymer, 3 Gew.-Tln. Zink White (KADOX 911), 30 Gew.-Tln. Ruß MT Black N 990, 3 Gew.-Tln. Percalink 301-50 (Triallylisocyanurat, 50 %ig in inaktiven Füllstoffen) und 7 Gew.-Tln. Perkadox 14/40 [Bis-(t-butylperoxy-isopropyl)-benzol, 40 %ig in inaktiven Füllstoffen] hergestellt. Diese Mischung wurde 30 min bei 180° C druckvulkanisiert und 24 Stunden bei 200° C im Umluftofen nachvulkanisiert`

Das vulkanisierte Produkt ist im Gegensatz zum Ausgangscopolymeren in BTFMP bei 120°C nicht mehr löslich (Gelgehalt: > 95 %). Eine analog hergestellte Mischung mit einem Vinylidenfluorid-Hexafluorpropen-Copolymer ohne Dien-Comonomer läßt sich unter den angegebenen Bedingungen nicht vernetzen.

## Patentansprüche

1. Unvernetzte Copolymerisate mit reaktiven Doppelbindungen mit einem Gelgehalt < 10 %. aus den Comonomeren a), b) und c), wobei die Menge an c) 0,1-5 Mol-% und die Summe aus a) und b) 95-99,9 Mol-%, bezogen auf die Molzahlen aller Comonomere, beträgt, in der a) mindestens 45 Mol-% und b) 10-54,9 Mol-% beträgt und
a) Vinylidenfluorid und/oder Chlortrifluorethylen und/oder Vinylfluorid,
b) ein oder mehrere Comonomere aus der Gruppe von
b1) geradkettigen oder verzweigten C₃-C₈-Alkenen mit mindestens einem Fluoratom,
b2) Alkyl-vinylethern mit mindestens einem Fluoratom,
b3) offenkettigen oder cyclischen C₃-C₆-Ketonen mit fluorierten α,α'-Stellungen und
b4) nicht fluorierten C₂-C₄-Alkenen, C₃-C₆-Alkyl-vinylethern und/oder C₄-C₆-Vinylestern
und
c) ein oder mehrerer Comonomere aus der Gruppe der nicht konjugierten Diene, bevorzugt aus der Gruppe der nicht konjugierten Diene mit endständigen Doppelbindungen, bedeuten.

2. Copolymerisate nach Anspruch 1, dadurch gekennzeichnet, daß sie als Bestandteil a) eines oder mehrere Comonomere aus der Gruppe Vinylidenfluorid, Chlortrifluorethylen und Vinylflurorid enthalten und fluorhaltige C₃-C₈-Alkene Comonomere des Bestandteils b1) sein können.

3. Copolymerisate nach Anspruch 1, dadurch gekennzeichnet, daß eine Kombinationen zweier oder mehrerer Fluormonomeren aus der Gruppe Vinylidenfluorid/ Hexafluorpropen und Vinvlidenfluorid/Chlortrifluorethylen/Hexafluorpropen eingesetzt werden.

4. Copolymerisate nach Anspruch 1, dadurch gekennzeichnet, daß sie einen Anteil an Comonomeren von 45-55 Mol-% aus Gruppe a), 44,9-54,9 Mol-% aus Gruppe b) und 0,1-5 Mol-% aus Gruppe c), bevorzugt 47,9-51,9 Mol-% aus Gruppe a), 47,9-51,9 Mol-% aus Gruppe b) und 0,2-2,5 Mol-% aus Gruppe c) enthalten.

5. Verfahren zur Herstellung von Copolymerisaten nach Anspruch 1, dadurch gekennzeichnet, daß man die in Anspruch 1 genannten Comonomeren radikalisch in Lösung, Suspension oder Emulsion bei -15°C bis +120°C, bevorzugt bei 20 - 90°C, besonders bevorzugt bei 30 -80°C bei erhöhtem Druck copolymerisiert.

6. Verfahren nach Anspruch 5, dadurch gekennzeichnet, daß die Copolymerisation in Emulsion durchgeführt wird.

7. Verfahren nach Anspruch 6, dadurch gekennzeichnet, daß als radikalische Initiatoren anorganische Perverbindungen eingesetzt werden.

8. Verfahren nach Anspruch 5, dadurch gekennzeichnet, daß man maximal 5-30 Relativ-% an nicht konjugiertem Dien, bezogen auf die vorgesehene Gesamtmenge an nicht konjugiertem Dien, vorlegt und den Rest der vorgesehenen Menge an Dien gemäß Polymerisationsfortschritt nachdosiert.

9. Verfahren nach Anspruch 8, dadurch gekennzeichnet, daß sowohl das Dien als auch die Fluorcomonomeren bzw. die sie teilweise ersetzenden nicht fluorierten Monomere gemäß Polymerisationsfortschritt nachdosiert werden.

## Claims

1. Uncrosslinked copolymers of comonomers a), b) and c) containing reactive double bonds and having a gel content of <10%, the quantity of c) being 0.1 to 5 mol-% and the sum of a) and b) being 95 to 99.9 mol-%, based on the total mols of all comonomers, of which a) makes up at least 45 mol-% and b) from 10 to 54.9 mol-% and
a) is vinylidene fluoride and/or chlorotrifluoroethylene and/or vinyl fluoride,
b) is one or more comonomers from the group consisting of
b1) linear or branched C₃₋₈ alkenes containing at least one fluorine atom,
b2) alkyl vinyl ethers containing at least one fluorine atom,
b3) open-chain or cyclic C₃₋₆ ketones containing fluorinated α,α'-positions and
b4) non-fluorinated C₂₋₄ alkenes, C₃₋₆ alkyl vinyl ethers and/or C₄₋₆ vinyl esters and
c) is one or more comonomers from the group of unconjugated dienes and preferably from the group of unconjugated dienes containing terminal double bonds.

2. Copolymers as claimed in claim 1, characterized in that they contain one or more comonomers from the group consisting of vinylidene fluoride, chlorotrifluoroethylene and vinyl fluoride as component a) and fluorine-containing C₃₋₈ alkenes can be comonomers of component b1).

3. Copolymers as claimed in claim 1, characterised in that a combination or two or more fluorine monomers from the group consisting of vinylidene fluoride/hexafluoropropene and vinylidene fluoride/chlorotrifluoroethylene/hexafluoropropene is used.

4. Copolymers as claimed in claim 1, characterized in that they contain 45 to 55 mol-% of comonomers from group a), 44.9 to 54.9 mol-% of comonomers from group b) and 0.1 to 5 mol-% of comonomers from group c), preferably 47.9 to 51.9 mol-% of comonomers from group a), 47.9 to 51.9 mol-% of comonomers from group b) and 0.2 to 2.5 mol-% of comonomers from group c).

5. A process for the production of the copolymers claimed in claim 1, characterized in that the comonomers mentioned in claim 1 are radical-copolymerized in solution, suspension or emulsion under elevated pressure at temperatures of -15 to +120°C, preferably at temperatures of 20 to 90°C and, more preferably, at temperatures of 30 to 80°C.

6. A process as claimed in claim 5, characterized in that the copolymerization is carried out in emulsion.

7. A process as claimed in claim 6, characterized in that inorganic per compounds are used as radical initiators.

8. A process as claimed in claim 5, characterized in that at most 5 to 30 relative-% of unconjugated diene, based on the intended total quantity of unconjugated diene, is initially introduced and the rest of the intended quantity of diene is added as the polymerization progresses.

9. A process as claimed in claim 8, characterized in that both the diene and fluorine comonomers or the non-fluorinated monomers partly replacing them are added as the polymerization progresses.

## Revendications

1. Copolymères non réticulés à doubles liaisons réactives, à une teneur en gel inférieure à 10 %, obtenus à partir des comonomères a), b) et c), la quantité de c) étant de 0,1 à 5 mol % et la somme de a) et b) de 95 à 99,9 mol %, par rapport au nombre de moles de tous les comonomères, dans laquelle a) représente au moins 45 mol % et b) de 10 à 54,9 mol %,
Les comonomères a) consistant en fluorure de vinylidène et/ou chlorotrifluoréthylène et/ou fluorure de vinyle,
les comonomères b) consistant en un ou plusieurs comonomères du groupe suivant :
b1) les alcènes à chaîne droite ou ramifiée en C₃-C₈ contenant au moins un atome de fluor,
b2) les éthers alkyl-vinyliques contenant au moins un atome de fluor,
b3) les cétones acycliques ou cycliques en C₃-C₆ dont les positions α,α'sont fluorées et
b4) les alcènes en C₂-C₄, éthers alkylvinyliques en C₃-C₆ et/ou esters vinyliques en C₄-C₆ non fluorés et
Les comonomères c) consistant en un ou plusieurs comonomères du groupe des diènes non conjugués, de préférence du groupe des diènes non conjugués à doubles liaisons terminales.

2. Copolymèrès selon la revendication 1, caractérisés en ce qu'ils contiennent en tant que composant a) un ou plusieurs comonomères du groupe du fluorure de vinylidène, du chlorotrifluoréthylène et du fluorure de vinyle et en ce que les comonomères du composant b1) peuvent consister en alcènes fluorés en C₃-C₈.

3. Copolymères selon la revendication 1, caractérisés en ce qu'ils ont été atteints préparés à partir d'une combinaison de deux ou plusieurs monomères fluorés du groupe fluorure de vinylidène/hexafluoropropène et fluorure de vinylidène/chlorotrifluoréthylène/hexafluoropropène.

4. Copolymères selon la revendication 1, caractérisés en ce qu'ils contiennent de 45 à 55 mol % de comonomères du groupe a), de 44,9 à 54,9 mol % de comonomères du groupe b) et de 0 à 5 mol % de comonomères du groupe c), de préférence de 47,9 à 51,9 moi % de comonomères du groupe a), de 47,9 à 51,9 mol % de comonomères du groupe b) et de 0,2 à 2,5 mol % de comonomères du groupe c).

5. Procédé de préparation des copolymères selon la revendication 1, caractérisé en ce que l'on soumet les comonomères mentionnés dans la revendication 1 à copolymérisation radicalaire en solution, en suspension ou en émulsion à des températures allant de -15 à +120°C, de préférence de 20 à 90°C et plus spécialement de 30 à 80°C sous pression.

6. Procédé selon la revendication 5, caractérisé en ce que la copolymérisation est réalisée en émulsion.

7. Procédé selon la revendication 6, caractérisé en ce que l'on utilise des composés peroxydés minéraux en tant qu'inducteurs radicalaires.

8. Procédé selon la revendication 5, caractérisé en ce que l'on introduit au début une proportion maximale de 5 à 30 % de diène non conjugué, par rapport à la quantité totale prévue de diène non conjugué et on introduit le reste de la quantité prévue en cours de polymérisation au fur et à mesure des progrès de la polymérisation.

9. Procédé selon la revendication 8, caractérisé en ce que le diène, de même que les comonomères fluorés et les monomères non fluorés qui les remplace en partie, sont introduits dans le cours des opérations au fur et à mesure des progrès de la polymérisation.
